# EUROPÄISCHE PATENTSCHRIFT

(11) **EP 1 266 156 B1**
(45) Veröffentlichungstag und Bekanntmachung des Hinweises auf die Patenterteilung: **03.01.2007**
(21) Anmeldenummer: 01911434.7
(22) Anmeldetag: 07.02.2001
(51) Int. Cl.: F16J 9/00, B23K 26/36

(54) **Verfahren zur Herstellung eines Kolbens für Verbrennungsmotoren**
Method for mnufacturing a piston for internal combustion engines
Méthode de fabrication d'un piston pour moteurs à combustion interne

(30) Priorität: 24.03.2000 DE 10014900
(43) Veröffentlichungstag der Anmeldung: 18.12.2002
(73) Patentinhaber: MAHLE GMBH, D-70376 Stuttgart (DE)
(72) Erfinder: ISSLER, Wolfgang, 71409 Schwaikheim (DE)
(86) Internationale Anmeldenummer: PCT/DE2001/000483
(87) Internationale Veröffentlichungsnummer: WO 2001/073322

(56) Entgegenhaltungen:
- CH-A- 373 594
- DE-A- 4 205 503
- US-A- 4 359 229
- US-A- 4 387 627
- US-A- 5 149 937
- US-A- 5 515 770

## Beschreibung

Die Erfindung betrifft ein Verfahren zur Herstellung einer Profilierung in Ringnuten eines Kolbens für Verbrennungsmotoren nach dem Oberbegriff des Anspruchs 1. Ein Kolben mit einer Profilierung ist aus der DE 42 05 503 bekannt. Dabei sollen durch eine Profilierung zumindest der Unterflanken einer Ringnut Nutschädigungen verhindert werden.

Die Profilierung wird mechanisch durch Drehen erzeugt. Dabei entsteht z.B. ein "Schallplattenprofil" auf der Nutflanke. Diese Profilierung ist fertigungstechnisch jedoch schwer herzustellen.

Die US-A-5,149,937 offenbart allgemein die Verwendung von Laserstrahlen zum Abtragen von Material bzw. Herstellung von Hohlräumen an Werkstücken. Insbesondere soll der Laserstrahl während jedes linienförmigen Abtragvorganges um einen vorgegebenen Winkel geschwenkt und das Werkstück gleichzeitig so bewegt werden, dass sich der jeweilige Bearbeitungspunkt auf einen Kreisbogen um die Schwenkachse des Laserstrahls befindet, wobei bis zum Erreichen einer vorgegebenen Tiefe des Hohlraumes der Vorgang wiederholt wird. Damit sind jedoch nur die Seitenwände eines Hohlraumes bis zu einem bestimmten Winkel α, wie in den Figuren 3 und 4 dargestellt, bearbeitbar.

Die Erfindung beschäftigt sich mit dem Problem, entsprechende Profilierungen auf einfache Weise herzustellen. Dieses Problem wird durch ein Verfahren bei gattungsgemäßen Kolben durch das kennzeichnende Merkmal des Anspruchs 1 gelöst. Vorteilhafte Weiterbildungen sind Gegenstand der Unteransprüche.

Mittels Laserstrahlen lassen sich entsprechende Profilierungen auf einfache Weise und gut reproduzierbar erzeugen.

Die Erfindung wird im folgenden anhand einer Zeichnung näher erläutert. Es zeigt:

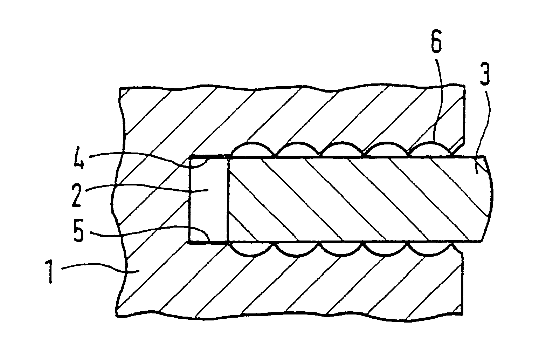

- Fig. 1: eine Ringnut eines Kolbens für Verbrennungsmotoren mit profilierten Nutflanken.

In einem Aluminium-Kolben 1 eines Verbrennungsmotors liegt eine Ringnut 2 mit einem Kompressionsring 3. In der Nutoberflanke 4 und der Nutunterflanke 5 sind umfangsmäßig umlaufende konzentrische Rillen 6 eingebracht. Diese Rillen sind durch Laserstrahlen hergestellt.

## Patentansprüche

1. Verfahren zur Herstellung einer Profilierung in Ringnuten eines Kolbens für Verbrennungsmotoren mit mindestens einer Ringnut (2), bei dem zumindest die untere Nutflanke (5) eine Profilierung aufweist,
**dadurch gekennzeichnet,**
**dass** die Profilierung durch senkrecht zur Nutflanke geführte Laserstrahlen derart erzeugt wird, dass konzentrischen Rillen (6), entstehen.

2. Verfahren nach Anspruch 1,
**dadurch gekennzeichnet,**
**dass** die Profilierung spiralförmig eingebracht wird.

3. Verfahren nach Anspruch 1 oder 2,
**dadurch gekennzeichnet,**
**dass** die Profilierung nur abschnittweise ausgebildet wird.

4. Verfahren nach Anspruch 1,
**dadurch gekennzeichnet,**
**dass** mehrere profilierte Bereiche mit Rillen erzeugt werden, die sowohl eine Radialkomponente als auch eine Umfangskomponente aufweisen.

## Claims

1. Method for producing a profile in annular grooves of a piston for internal combustion engines with at least one annular groove (2) in which at least the lower groove side (5) is profiled,
**characterised in that**
the profiling is produced by laser beams directed perpendicular to the groove side so that concentric grooves (6) are formed.

2. Method according to claim 1,
**characterised in that**
the profiling produced is spiral-shaped.

3. Method according to claim 1 or 2,
**characterised in that**
the profiling is only formed in some sections

4. Method according to claim 1,
**characterised in that**
several profiled areas with grooves are produced which have both a radial component and a peripheral component.

## Revendications

1. Procédé de fabrication d'un profilage dans des gorges de segments d'un piston pour moteurs à combustion interne comportant au moins une gorge de segment (2) dans laquelle au moins le flanc de gorge inférieur (5) présente un profilage,
**caractérisé en ce**
**que** le profilage est généré par des rayons laser guidés perpendiculairement par rapport au flanc de gorge, de telle façon qu'il se forme des cannelures concentriques (6).

2. Procédé selon la revendication 1,
**caractérisé en ce**
**que** le profilage est ménagé en forme de spirale.

3. Procédé selon la revendication 1 ou 2,
**caractérisé en ce**
**que** le profilage n'est réalisé que par tronçons.

4. Procédé selon la revendication 1,
**caractérisé en ce**
**que** plusieurs zones profilées sont réalisées avec des cannelures qui présentent aussi bien une composante radiale qu'une composante périphérique.
